Europäisches Patentamt

(19) European Patent Office

Office européen des brevets

(11) Veröffentlichungsnummer: **0 256 339**
**B1**

(12) # EUROPÄISCHE PATENTSCHRIFT

(45) Veröffentlichungstag der Patentschrift:
04.04.90

(51) Int. Cl.⁴: **F16D 65/12**

(21) Anmeldenummer: 87110574.8

(22) Anmeldetag: **22.07.87**

(54) **Radbremsscheibe für Schienenfahrzeuge.**

(30) Priorität: 11.08.86 DE 3627176

(43) Veröffentlichungstag der Anmeldung:
24.02.88 Patentblatt 88/8

(45) Bekanntmachung des Hinweises auf die Patenterteilung:
04.04.90 Patentblatt 90/14

(84) Benannte Vertragsstaaten:
AT BE DE ES FR GB IT NL SE

(56) Entgegenhaltungen:
EP-A- 0 062 774
DE-A- 1 680 379
DE-B- 1 031 337
DE-B- 1 141 309
FR-A- 1 562 304

(73) Patentinhaber: Bergische Stahl-Industrie,
Papenbergerstrasse 38, D-5630 Remscheid(DE)

(72) Erfinder: Gronemann, Manfred, Friedhof-Strasse 8,
D-5630 Remscheid(DE)
Erfinder: Lehmann, Wolfgang, Elisabethplatz 6,
D-5630 Remscheid(DE)
Erfinder: Otto, Alfred, Karl-Michel-Strasse 2,
D-5630 Remscheid(DE)

(74) Vertreter: Jung, Hermann L., Dipl.-Chem.,
Postfach 1728 Augusta-Allee 10, D-6380 Bad Homburg
v.d.H.(DE)

## Beschreibung

Die Erfindung betrifft eine Radbremsscheibe für Schienenfahrzeuge, welche sich mit mindestens drei auf der Rückseite etwa im Bremsradius angeordneten Nocken an einer Radscheibe eines Schienenrades abstützt und mittels am äusseren Rand der Bremsscheibe angeordneter Kulissensteinführungen über Kulissensteine an der Radscheibe zentriert und befestigt ist, wobei auf der Rückseite Rippen zur Bildung von Kühlluftkanälen vorgesehen sind.

Es sind eine ganze Reihe von Befestigungen von Bremsscheiben an Schienenrädern bekannt, bei denen Kulissensteinführungen verwendet werden. So sind die Kulissensteinführungen bei der Konstruktion nach DE-A 16 80 379 am äusseren Rand der Bremsscheibe angeordnet, wobei mit achsparallelen sich bis in den Randkörper erstreckenden Schrauben eine axiale Bewegung der Bremsscheibe absolut verhindert wird, wohingegen die radiale Ausdehnung der Bremsscheibe infolge der Erwärmung beim Bremsen ungehindert möglich ist. Eine ähnliche Konstruktion ist aus DE-B 10 31 337 bekannt. In anderen Fällen (z.B. DE-B 11 41 309) ist die Kulissensteinführung etwa im Bremsradius der Bremsscheibe angeordnet. Eine etwas andere Ausbildung einer im Bremsradius liegenden Kulissensteinführung ist aus FR-A 1 562 304 bekannt, wobei jedoch die Bremsscheibe aus einem nur relativ schmalen Ring besteht. Es ist auch schon vorgeschlagen worden (EP-A 0 062 774), die Kulissensteinführung möglichst nahe an der Radnabe anzuordnen und die Bremsscheibe im radial äusseren Bereich an der Radscheibe anzuordnen.

Alle vorgenannten Konstruktionen besitzen aber den grossen Nachteil, dass zwar die radiale Ausdehnung und das Schrumpfen der Bremsscheibe infolge der Erwärmung und der Abkühlung beim Bremsen sehr gut kompensiert werden, aber es werden die noch ausserdem vorhandenen Verformungen der Bremsscheibe nicht berücksichtigt. Dazu gehört vor allem eine topfförmige Verformung, je nachdem wo die Bremsscheibe mit achsparallelen Schrauben an der Radscheibe festgespannt ist. Es sind die unterschiedlichsten Verformungen, insbesondere bei ausserordentlich grossen Bremsleistungen festgestellt worden, wie sie insbesondere bei Hochgeschwindigkeitszügen oder bei S-Bahnen mit sehr kurzen Halteabständen vorkommen. Es treten dabei unter Umständen so grosse Kräfte auf, dass Verformungen zu Rissen führen, die zur Zerstörung der Scheibe oder des Rades führen können.

Der vorliegenden Erfindung liegt daher die Aufgabe zugrunde, diese Nachteile der bekannten Konstruktionen zu vermeiden und eine Möglichkeit für eine ungehinderte Ausdehnung der Bremsscheibe auch in axialer Richtung zuzulassen, ohne dass eine Schwächung der Befestigung oder radialen Ausdehnungsmöglichkeit in Kauf genommen werden muss.

Die Lösung der Aufgabe besteht darin, dass zwischen den Führungen für die Kulissensteine und an diesen angeordneten Flanschen ein oder mehrere Druckfedern vorgesehen sind, wobei die Führungen zwischen Radscheibe und Flanschen liegend zu diesen jeweils ein Axialspiel besitzen und ein entweder die Kulissensteine oder die Führungen unverrückbar mit der Radscheibe verbunden sind.

Vorteilhaft ist je der Kulissenstein auf einer in der Radscheibe achsparallel liegenden Spannhülse mit einer die Spannhülse mit Spiel durchdringenden Schraube festgelegt und beiderseits etwa tangential zu jedem Kulissenstein erstreckt sich je ein Flansch, auf dessen Rückseite je eine Druckfeder in einer Blindbohrung liegt und sich jede Druckfeder bis in eine Blindbohrung in jeder Führung erstreckt und dass zwischen Führungen und Flanschen das Spiel w und zwischen den Führungen und der Radscheibe das Spiel x vorhanden ist.

Der Vorteil der erfindungsgemässen Konstruktion besteht darin, dass die Bremsscheibe thermisch optimal ausgelegt werden kann, dass sie einfach am Schienenrad anzubringen ist und dass sie die Möglichkeit bietet, unterschiedliche Werkstoffe zu verwenden, wie z.B. Grauguß oder Kugelgraphitguss, und auch zweiteilig sein kann. Wesentlich ist, dass nicht nur die radiale Ausdehnung während der Erwärmung beim Bremsen ungehindert möglich ist, sondern dass auch axiale Ausdehnungen während der Brems- bzw. Abkühlphase in Richtung der Radscheibe möglich sind, sodass keine unzulässigen Spannungen auftreten können. Im übrigen wird das Bremsmoment mit Sicherheit übertragen, wobei die Bremsscheibe am Rad festgehalten wird.

In den Zeichnungen ist eine beispielsweise Ausführungsform der Erfindung dargestellt und zwar zeigt:

Figur 1 einen Schnitt nach der Linie A - B der Fig.2
Figur 2 eine Seitenansicht einer Befestigung.

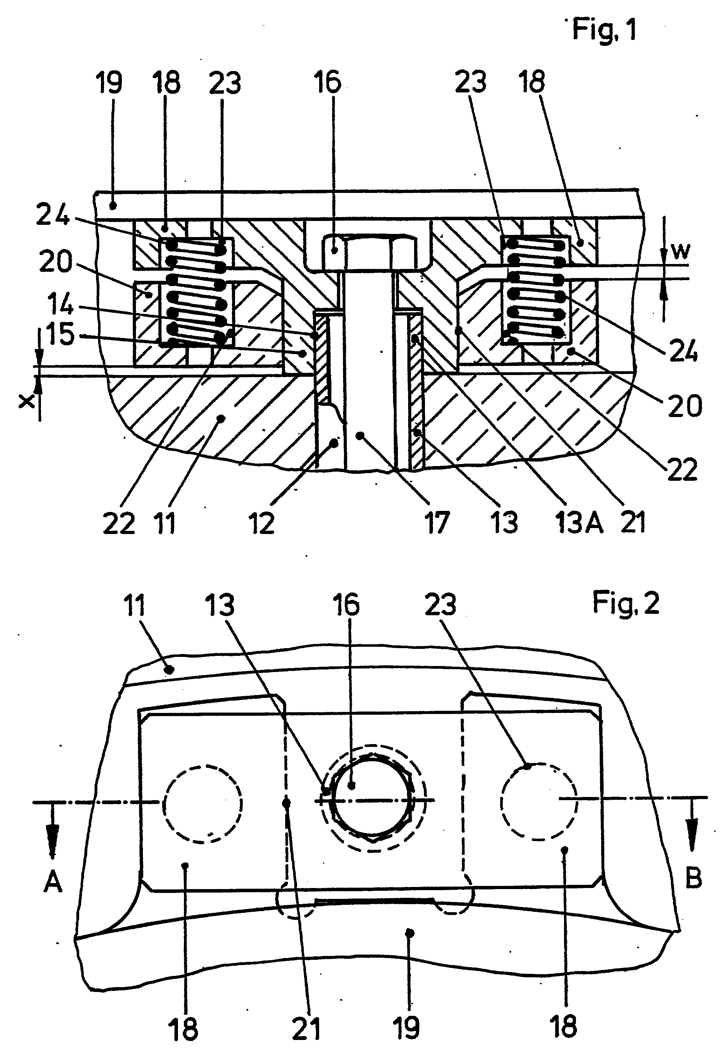

Nach den Figuren 1 und 2 ist in der Radscheibe 11 nahe dem Rad-reifen in einer Bohrung 12 eine achsparallele Spannhülse 13 eingesetzt, wobei der vorstehende Teil 13A der Spannhülse 13 bei allen Befestigungspunkten an einem Rad gleich ist und sich in eine Bohrung 14 des Kulissensteins 15 erstreckt. Der Kulissenstein 15 wird vom Kopf 16 einer mit Spiel in der Spannhülse 13 liegenden Schraube 17 am Rad 11 fest anliegend gehalten. Etwa tangential beiderseits des Kulissensteins 15 ist je ein Flansch 18 angeordnet. An der Bremsscheibe 19 sind am äusseren Rand Führungen 20 angeordnet, welche mit den Führungsflächen 21 in etwa radialer Richtung auf dem Kulissenstein 15 gleiten. Zwischen den Führungen 20 und den Flanschen 18 am Kulissenstein 15 ist ein Spiel w vorhanden und zwischen den Führungen 20 und der Radscheibe 11 ist ein Spiel x vorgesehen. Sowohl in den Führungen 20 als auch auf der Rückseite eines jeden Flanschs 18 sind etwa korrespondierende Blindbohrungen 22 und 23 angebracht, in denen je eine Druckfeder 24 vorgespannt liegt. Die Bremsscheibe 19 liegt in bekannter Weise mit Nocken auf ihrer Rückseite an der Radscheibe 11 an, wobei die Nocken vorteilhaft im Bremsradius der Scheibe 19 angeordnet sind. Weiter trägt die Bremsscheibe 19 auf ihrer Rückseite Lüfterrippen, von denen Kanäle für die Kühlluft gebildet werden.

Die Kulissensteine erfüllen mehrere Funktionen. Einmal übernehmen sie die Zentrierung der Bremsscheibe 19 am Rad 11 über die Führungsflächen 21. Hier werden dann auch die Bremskräfte von der Bremsscheibe 19 auf das Rad 11 übertragen, wobei auf den Führungsflächen 21 die Führungen 20 in radialer Richtung gleiten, wenn sich die Bremsscheibe beim wiederholten Bremsen erwärmt hat und auch bei der anschliessenden Abkühlung. Gleichzeitig bildet jeder Flansch 18 am Kulissenstein 15 das Gegenlager für die Feder 24, welche sich auf der anderen Seite an der Führung 20 abstützt. Wegen der Veränderung des Durchmessers der Bremsscheibe bei der Erwärmung beim Bremsen sind die Bohrungen 22 in den Führungen 20 auf einem anderen Teilkreis angeordnet als die Bohrungen 23 in den Flanschen 18 der Kulissensteine 15. Damit wird sicher verhindert, dass die Federn 24 infolge der Verschiebung der beiden Bohrungen 22 und 23 zueinander beschädigt oder gar zerstört werden. Ausserdem verformt sich die Bremsscheibe 19 etwa topfförmig un die an der Radscheibe anliegenden Nocken, das heisst, im Aussendurchmesserbereich bewegt sich die Bremsscheibe 19 von der Radscheibe 11 weg, wodurch das Spiel w kleiner wird und die Federn 24 zusammengedrückt werden. Während der Abkühlphase gehen die Führungen 20 wieder in die in Fig. 1 dargestellte Stellung zurück, wodurch wieder etwa das gleiche Spiel w und x vorhanden sind. Das Spiel x ist dann notwendig, wenn sich infolge der Konstruktion der Bremsscheibe 19 bei der Erwärmung die Führungen 20 auf die Radscheibe 11 zubewegen, sodass dann das Spiel x kleiner wird. Bei dieser Bewegung dehnen sich die Federn 24 wegen ihrer Vorspannung etwas aus und folgen somit der Bewegung der Führungen 20 an der Bremsscheibe 19. Bei der Abkühlung werden die Federn 24 wieder zusammengedrückt. Es ist leicht einzusehen, dass die Bremsscheibe 19 wegen ihrer geführten Bewegungsmöglichkeit weit weniger rissanfällig ist, besonders wenn sie aus einem spröden Material besteht, als wenn sie am Aussendurchmesser festgeschraubt ist.

Es sind eine ganze Reihe von Modifikationen denkbar, welche aber alle im Rahmen der vorliegenden Erfindung liegen. So kann insbesondere eine Vertauschung von Kulissensteinen und Führungen vorgenommen werden, ohne dass dadurch die erfindungsgemässen Vorteile verloren gehen. Das heisst, man kann ohne weiteres die Kulissensteine mit der Bremsscheibe verbinden und die Führungen an der Radscheibe befestigen. Auch ist die Befestigung an der Radscheibe völlig frei. Die Führungen müssen auch nicht auf den Aussendurchmesser der Bremsscheibe aufgesetzt sein, sondern können ohne weiteres als radiale Schlitze in der Bremsscheibe vorgesehen sein.

## Patentansprüche

1. Radbremsscheibe (19) für Schienenfahrzeuge, welche sich mit mindestens drei auf der Rückseite etwa im Bremsradius angeordneten Nocken an einer Radscheibe (11) eines Schienenrades abstützt und mittels am äusseren Rand der Bremsscheibe (19) angeordneter Kulissensteinführungen (20) über Kulissensteine (15) an der Radscheibe (11) zentriert und befestigt ist, wobei auf der Rückseite Rippen zur Bildung von Kühlluftkanälen vorgesehen sind, dadurch gekennzeichnet, dass zwischen den Führungen (20) für die Kulissensteine (15) und an diesen angeordneten Flanschen (18) ein oder mehrere Druckfedern (24) vorgesehen sind, wobei die Führungen (20), zwischen Radscheibe (11) und Flanschen (18) liegend, zu diesen jeweils ein Axialspiel (w) und (x) besitzen und entweder die Kulissensteine (15) oder die Führungen (20) unverrückbar mit der Radscheibe (11) verbunden sind.

2. Radbremsscheibe nach Anspruch 1, dadurch gekennzeichnet, dass jeder Kulissenstein (15) auf einer in der Radscheibe (11) achsparallel liegenden Spannhülse (13) mit einer die Spannhülse (13) mit Spiel durchdringenden Schraube (17) festgelegt ist und dass sich beiderseits jedes Kulissensteins (15) etwa tangential je ein Flansch (18) erstreckt, auf dessen Rückseite je eine Druckfeder (24) in einer Blindbohrung (23) liegt und sich bis in eine Blindbohrung (22) in jeder Führung (20) erstreckt und dass zwischen jeder Führung (20) und jedem Flansch (18) das Spiel (w) und zwischen den Führungen (20) und der Radscheibe (11) das Spiel (x) als Abstand vorhanden ist.

3. Radbremsscheibe nach Anspruch 1 oder 2, dadurch gekennzeichnet, dass die einander gegenüberliegenden Bohrungen (22) und (23) auf versetzten Teilkreisen liegen.

4. Radbremsscheibe nach einem der Anprüche 1 bis 3, dadurch gekennzeichnet, dass die Druckfedern (24) vorgespannt sind.

## Claims

1. Wheel brake disc (19) for railway vehicles, which is supported by at least three cams arranged on the reverse side approximately in the radius of the brake on a wheel disc (11) of a railway wheel and is centred on and fastened to the wheel disc (11) via link blocks (15) by means of link block guides (20) arranged on the outer edge of the brake disc (19), ribs being provided on the reverse side to form cooling air channels, characterized in that one or more compression springs (24) are provided between the guides (20) for the link blocks (15) and flanges (18) arranged on the latter, the guides (20), lying between wheel disc (11) and flanges (18), having an axial play (w) and (x) to the said wheel disc (11) and flanges (18) respectively, and either the link blocks (15) or the guides (20) being connected non-displaceably to the wheel disc (11).

2. Wheel brake disc according to Claim 1, characterized in that each link block (15) is fixed to a tension sleeve (13), lying parallel to the axis in the wheel disc (11), by a screw (17) penetrating the tension sleeve (13) with play, and in that on both sides of each link block (15) a flange (18) extends approximately tangentially in each case, on the reverse side of which a compression spring (24) lies in each case in a blind bore (23) and extends into a blind bore (22) in each guide (20), and in that the play (w) between each guide (20) and each flange (18) and the play (x) between the guides (20) and the wheel disc (11) is present as spacing.

3. Wheel brake disc according to Claim 1 or 2, characterized in that the bores (22) and (23) lying opposite one another lie on offset reference circles.

4. Wheel brake disc according to one of Claims 1 to 3, characterized in that the compression springs (24) are prestressed.

## Revendications

1. Disque (19), de frein pour roue de véhicules ferroviaires, s'appuyant par au moins trois ergots disposés approximativement dans le rayon de freinage contre le disque (11) d'une roue de véhicule ferroviaire, centré et fixé via des coulisseaux (15) contre le disque de roue (11) par des guide-coulisseau (20) disposés sur la bordure extérieure du disque de frein (19), des nervures étant prévues au dos afin de former des couloirs de refroidissement par air, caractérisé en ce qu'entre les guides (20) des coulisseaux (15) et les flasques (18) disposés contre ces derniers plusieurs ressorts de compression (24) sont prévus, les guides (20) situés entre le disque (11) et les flasques (18) présentant chacun un jeu axial (w) et (x) et reliant en les immobilisant soit les coulisseaux (15) soit les guides (20) avec le disque de roue (11).

2. Disque de frein de roue selon revendication 1, caractérisé en ce que chaque coulisseau (15) est retenu, sur une douille de serrage (13) située dans le disque (11) parallèlement à l'axe, par une vis (17) traversant la douille (13) avec du jeu, et en ce que de chaque côté de chaque coulisseau (15) se trouve un flasque (18) sur un plan approximativement tangentiel dans le dos à trou borgne (23) duquel repose un ressort de compression (24) allant jusque dans le trou borgne (22) de chaque guide (20), et en ce que entre chaque guide (20) et chaque flasque (18) existe le jeu (w) et entre les guides (20) et le disque de roue (11) existe le jeu (x) en tant qu'écart.

3. Disque de frein de roue selon revendication 1 ou 2, caractérisé en ce que les trous (22) et (23) se faisant face se trouvent sur des cercles partiels décalés.

4. Disque de frein de roue selon l'une des revendications 1 à 3, caractérisé en ce que les ressorts de compression sont précontraints.

Fig. 1

Fig. 2